Europäisches Patentamt

European Patent Office

Office européen des brevets

(19)

(11) Numéro de publication : **0 036 234 B1**

(12) **FASCICULE DE BREVET EUROPÉEN**

(45) Date de publication du fascicule du brevet :
28.12.83

(51) Int. Cl.³ : **G 01 S   7/36, H 01 Q   3/06**

(21) Numéro de dépôt : **81200277.2**

(22) Date de dépôt : **12.03.81**

(54) **Système de balayage sectoral automatique d'un arbre de rotation de part et d'autre d'une position angulaire prédéterminée qui reste fixe au cours du temps.**

(30) Priorité : **19.03.80 FR 8006135**

(43) Date de publication de la demande :
**23.09.81 Bulletin 81/38**

(45) Mention de la délivrance du brevet :
**28.12.83 Bulletin 83/52**

(84) Etats contractants désignés :
**BE CH DE FR GB IT LI NL SE**

(56) Documents cités :
**DE-A- 1 766 278**
**FR-A- 2 365 130**
**US-A- 2 502 975**
**US-A- 3 437 894**
**US-A- 3 487 277**
**US-A- 3 636 427**

(73) Titulaire : **SOCIETE D'OPTIQUE, DE MECANIQUE D'ELECTRICITE ET DE RADIO O.M.E.R.A. - S.E.G.I.D.**
**49, rue Ferdinand Berthoud**
**F-95100 Argenteuil (FR)**
**FR**
**N.V. Philips' Gloeilampenfabrieken**
**Groenewoudseweg 1**
**NL-5621 BA Eindhoven (NL)**
**BE CH DE GB IT LI NL SE**

(72) Inventeur : **Provendier, François**
**SOCIETE CIVILE S.P.I.D. 209 rue de L'Université**
**F-75007 Paris (FR)**

(74) Mandataire : **Pyronnet, Jacques et al**
**Société Civile S.P.I.D. 209 rue de l'Université**
**F-75007 Paris (FR)**

# Système de balayage sectoral automatique d'un arbre de rotation de part et d'autre d'une position angulaire prédéterminée qui reste fixe au cours du temps

L'invention concerne un système pour commander en rotation l'arbre d'un moteur de façon à provoquer automatiquement un mouvement d'oscillation de cet arbre de part et d'autre d'une position angulaire prédéterminée qui reste fixe au cours du temps.

L'invention concerne plus particulièrement l'entraînement en rotation d'une antenne de radar. Dans cette application, il est souhaitable de pouvoir communiquer à l'antenne les mouvements suivants : soit une rotation continue dans l'un ou l'autre sens de rotation, dit mode « rotation continue », soit un mouvement de balayage alternatif d'ampleur angulaire prédéterminée de part et d'autre d'un plan virtuel fixe dont la position angulaire est prédéterminée, dit mode « veille ». Le mode « rotation continue » peut être soit permanent afin d'explorer l'espace environnant sur 360 degrés d'angle, soit temporaire dans le but de modifier la position angulaire du plan virtuel perpendiculaire au secteur de balayage.

Dans la technologie connue, les déplacements définis ci-dessus pour une antenne de radar sont obtenus au moyen d'un asservissement de position ce qui garantit l'absence de dérive du plan virtuel perpendiculaire au secteur de balayage en mode « veille ». Pour réaliser cet asservissement de position il est nécessaire de mettre en place sur l'axe de l'antenne un capteur qui donne une information sur la position angulaire de l'antenne. Il faut aussi disposer d'un deuxième capteur qui n'est pas lié à l'antenne et qui est entraîné par une manivelle de commande et dont l'étalonnage doit être aussi semblable que possible à celui du premier capteur. Le signal de sortie de chacun des deux capteurs est transmis à un comparateur qui en déduit par différence un signal d'erreur analogique $\varepsilon$ qui, après amplification, commande un moteur en sens inverse de la différence $\varepsilon$ détectée. Pour obtenir la rotation forcée, il suffit d'agir sur la manivelle de commande du deuxième capteur dont la position détermine l'axe théorique de l'antenne. Pour une position déterminée de l'axe (manivelle de commande fixe), le mouvement d'oscillation de l'antenne s'obtient en introduisant sur une troisième entrée du comparateur un signal de tension v qui s'ajoute algébriquement aux signaux sur les deux autres entrées et dont la forme d'onde détermine le mouvement alternatif de l'antenne. Un tel asservissement donne au système de commande en rotation de l'antenne une bonne précision et une certaine souplesse de fonctionnement, mais en contrepartie il est nécessaire d'utiliser des organes de précision et de procéder à un réglage préalable de l'asservissement, en étudiant sa stabilité notamment, pour chaque modèle d'antenne. Par exemple le moteur d'entraînement est un moteur à courant continu dont l'asservissement est assez coûteux.

D'autres systèmes utilisant des contacteurs pour déterminer le sens de rotation du moteur d'entraînement, de type asynchrone, ont été décrits dans le document US-A-3 636 427.

L'invention réduit les inconvénients précités de la technique antérieure et permet d'obtenir un système pour commander en rotation l'arbre d'un moteur, plus simple et moins coûteux à mettre en œuvre, le système défini en préambule étant remarquable en ce qu'il comporte des contacteurs déterminant le sens de rotation dudit moteur, un disque solidaire en rotation dudit arbre et muni à sa périphérie de zones de détection régulièrement espacées, deux capteurs associés à un organe de mise en forme d'impulsions pour détecter lesdites zones, traduire leur passage sous forme d'impulsions électriques calibrées ainsi que leur sens de passage sous forme d'un signal électrique, un compteur-décompteur desdites impulsions calibrées retardées, dont l'état de charge est un nombre de valeur N variable, un organe d'affichage d'un nombre fixe prédéterminé N' et, dans un dispositif logique qui reçoit les nombres N et N' ainsi que ledit signal électrique, un comparateur pour comparer les nombres N et N', un détecteur de passage à zéro du nombre N, un organe de commande du changement de sens de rotation dudit moteur et un organe de commande de changement de sens de comptage dudit compteur-décompteur.

Le système selon l'invention n'offre pas la même souplesse que celui de la technique antérieure. En effet, le moteur, qui entraîne généralement une charge est commandé, selon l'invention par une tension fixe, dans un sens ou dans l'autre, et non plus par une tension continuement variable comme c'est le cas lors d'un asservissement de position. Cependant, le principal avantage de l'asservissement est conservé, à savoir la fixité de la position angulaire de l'axe théorique autour duquel oscille l'arbre du moteur. Ceci est rendu possible en utilisant un matériel très bon marché, constitué essentiellement par des circuits logiques à faible puissance, par exemple des circuits intégrés de série. De plus lorsque le système logique est mis au point il peut être ensuite produit industriellement sans nécessiter de réglage particulier lors de son implantation pour la commande d'un moteur.

Selon un premier mode de réalisation de l'invention, le système est remarquable en ce que ledit organe de commande de changement de sens de rotation du moteur reçoit la sortie dudit comparateur et que ledit organe de commande de changement de sens de comptage du compteur-décompteur reçoit sur une première entrée ledit signal électrique et sur une deuxième entrée la sortie dudit détecteur de passage à zéro du nombre N, le démarrage du système ayant lieu en position de comptage.

Selon un mode de réalisation compatible avec le précédent et s'appliquant à la commande en rotation d'une antenne de radar, le système est remarquable en ce qu'il comporte en outre un dispositif à contacts et un organe logique de commande des contacteurs du moteur, ce dernier recevant le signal de sortie dudit organe de commande du changement de sens de rotation, un signal de remise à zéro ainsi que deux signaux de commande forcée dans l'un ou l'autre sens de rotation de la part du dispositif à contacts, et fournissant deux signaux de sortie sur deux entrées dudit organe comportant lesdits contacteurs déterminant le sens de rotation du moteur.

La description suivante en regard des dessins annexés, le tout donné à titre d'exemple fera bien comprendre comment l'invention peut être réalisée.

La figure 1 est le schéma synoptique d'un premier mode de réalisation de l'invention.

La figure 2 est le schéma synoptique d'un deuxième mode de réalisation de l'invention.

La figure 3 représente une réalisation possible de l'organe logique de commande des contacteurs du moteur de la figure 2.

La figure 4 représente la partie logique d'un troisième mode de réalisation de l'invention.

La figure 5 représente la partie logique d'un quatrième mode de réalisation de l'invention.

La figure 6 représente la partie logique d'un cinquième mode de réalisation de l'invention.

La figure 7 représente une variante possible pour les quatrième et cinquième modes de réalisation.

La figure 8 représente la fonction schématisée du nombre N en fonction de l'angle de balayage θ, N(θ), en a pour les premier et deuxième modes de réalisation, en b pour le troisième mode de réalisation, en c pour le quatrième mode de réalisation et en d. pour le cinquième mode de réalisation.

Sur les figures, les mêmes références désignent les mêmes éléments avec les mêmes fonctions.

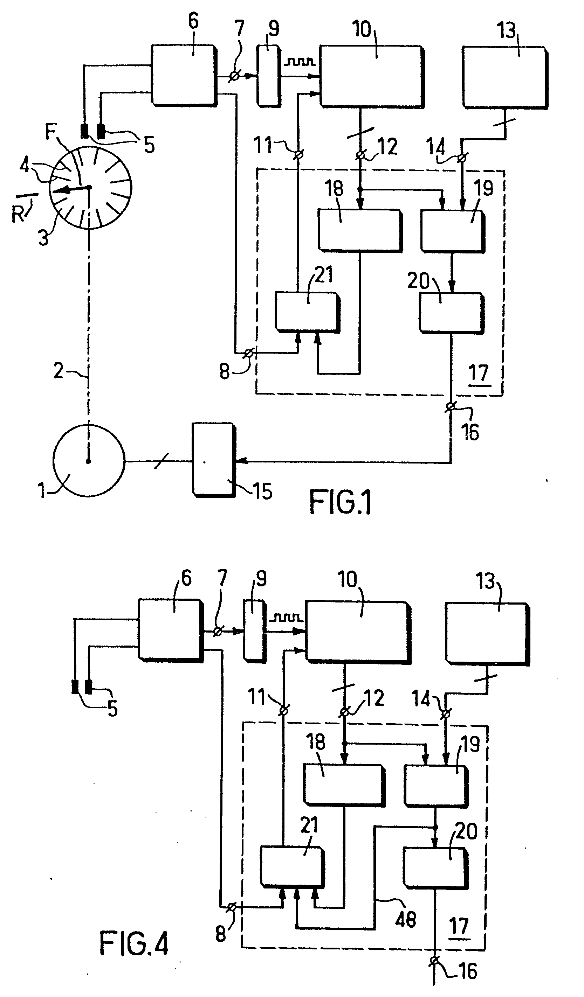

A la figure 1, un moteur 1 entraîne en rotation un arbre 2 représenté en trait mixte. Un disque 3 est solidaire de l'arbre 2 et comporte à sa périphérie des zones de détection régulièrement espacées, schématisées en 4. Deux capteurs 5 séparés par une distance inférieure à la distance qui sépare deux zones de détection adjacentes sont disposés à proximité de la périphérie du disque 3. Ils ont pour fonction d'émettre une impulsion électrique lorsqu'une zone de détection passe devant chacun d'eux. Cette détection peut être, de façon connue, soit électrique (contacts glissants) soit magnétique (disque à encoches) soit optique. Les impulsions émises par les capteurs 5 sont traitées dans un organe de mise en forme 6 dont la fonction est double : l'organe 6 transmet sur une première borne de sortie 7 des impulsions calibrées dont chacune est représentative du passage de chaque zone 4 devant les capteurs 5. L'organe de mise en forme 6 transmet en outre sur une deuxième borne de sortie 8 un signal électrique représentatif du sens de rotation du disque 3. Par exemple, ce signal électrique est un niveau de tension logique « 1 » lorsque le disque tourne dans le sens direct et un niveau de tension logique « 0 » lorsque le disque tourne dans le sens rétrograde. Les deux fonctions de l'organe 6 définies ci-dessus sont facilement réalisables par l'homme de métier, notamment à l'aide de bascules et de circuits-portes logiques. Les impulsions calibrées reçues sur la borne 7 sont retardées, de préférence, dans un organe de retardement 9, puis transmises par l'intermédiaire de ce dernier à un compteur-décompteur d'impulsions 10 qui comporte une deuxième entrée de sens de comptage d'impulsions, reliée à une borne 11. Le compteur-décompteur 10 est par exemple en comptage lorsque la borne 11 est le siège d'un niveau de tension logique « 1 » et en décomptage lorsque la borne 11 est au niveau de tension logique « 0 ». La sortie du compteur-décompteur 10 est multiple, ce qui est indiqué par une barre coupant le conducteur de sortie, et reliée à une borne multiple 12. L'état de charge variable du compteur-décompteur 10 est un nombre de valeur N qui est affiché sous une forme numérique prédéterminée, par exemple selon un code de numération à base 2, sur la borne multiple 12. De façon analogue, un organe d'affichage 13 permet d'afficher un nombre prédéterminé N' fixe, par exemple en binaire sur une borne de sortie multiple 14. L'organe 13 peut être réalisé notamment à l'aide de roues codeuses. Un organe qui renferme les contacteurs déterminant le sens de rotation du moteur, référencé 15, impose à ce dernier par exemple le sens de rotation direct lorsqu'il reçoit d'une borne 16 le niveau de tension logique « 1 » et le sens rétrograde lorsqu'il reçoit le niveau de tension logique « 0 ».

Un dispositif logique 17 représenté en trait interrompu, a ses entrées reliées aux bornes 8, 12 et 14 et ses sorties reliées aux bornes 11 et 16. Il comporte un détecteur de passage à zéro 18 qui reçoit les signaux de la borne 12, un comparateur 19 qui reçoit les signaux des bornes 12 et 14 et dont la sortie est reliée à la borne 16 par l'intermédiaire d'un organe de commande de changement de sens de rotation du moteur, 20. La sortie du détecteur 18 est reliée à une entrée d'un organe de commande du changement de sens de comptage 21 dont une deuxième entrée est reliée à la borne 8 et dont la sortie est reliée à la borne 11.

Le fonctionnement du système est le suivant, conformément à la fonction N(θ) représentée à la figure 8a :

L'état du système au repos est tel que, le moteur et les organes logiques n'étant pas alimentés, l'arbre du moteur se trouve dans la position repérée par une flèche F en regard d'un repère R fixe sur la figure 1 et les organes logiques 10, 20 et 21 sont remis à zéro. Un nombre N' est affiché, par exemple à la main dans l'organe 13. Lorsqu'on alimente le système à partir de la position de repos, l'état logique présent sur la borne 16 impose au moteur un sens de rotation. Cet état logique au démarrage peut être soit aléatoire, soit, de préférence prédéterminé de façon connue, à partir de l'organe 20.

Pour fixer les idées on suppose que la borne 16 est, au démarrage, à l'état logique « 1 ». Lors du passage de la première zone 4 devant les capteurs 5, une impulsion calibrée est transmise sur la borne 7 et le niveau logique « 1 » à la borne 8. Dans le mode de réalisation de la figure 1, l'organe 21 se réduit à un circuit-porte OU exclusif. Le niveau « 1 » sur la borne 8 est donc transmis à la borne 11, du fait que l'autre entrée de l'organe 21 est au niveau « 0 » comme on le verra ci-dessous et l'organe 10 est ainsi mis en position de comptage. Avant que la deuxième zone 4 ne passe devant les capteurs 5, la première impulsion sur la borne 7 est transmise, via l'organe de retardement 9, au compteur-décompteur 10 et comptée par ce dernier. Le temps de retard $\tau$ introduit par l'organe 9 est légèrement supérieur au temps de basculement des circuits logiques dans l'organe 21, ce temps $\tau$ étant par ailleurs nettement inférieur au temps de passage d'une zone 4 à la suivante devant les capteurs 5. Toutes les zones 4 sont ainsi prises en compte par le compteur-décompteur 10. Lorsque le nombre N atteint la valeur de N' alors que l'organe 10 est en état de comptage, le comparateur 19 délivre une impulsion à l'organe 20, ce qui a pour effet d'inverser l'état logique à sa sortie qui passe donc, dans l'exemple choisi, de 1 à 0. Ceci provoque, dans l'organe 15, une inversion du sens de rotation du moteur. A cause de l'inertie de rotation du rotor du moteur et d'une charge éventuelle non représentée solidaire de l'arbre 2, l'inversion de sens n'est pas instantanée et il est possible qu'une ou plusieurs impulsions soient encore comptées en 10 avant que le sens de rotation de l'arbre 2 ne s'inverse effectivement. Lorsque l'inversion a lieu, la dernière zone 4 comptée repasse en sens inverse devant les capteurs 5 ce qui a pour effet d'inverser l'état logique sur la borne 8, c'est-à-dire de faire passer cet état à 0. Pendant tout le temps écoulé depuis le démarrage du système, l'organe 18 n'ayant pas détecté de passage à zéro du nombre N a délivré un état logique 0 à sa sortie. A partir de l'inversion de sens de rotation le circuit-porte OU exclusif 21 va donc délivrer un état logique 0 sur la borne 11, ce qui fait passer l'organe 10 en état de décomptage. La première impulsion décomptée correspond à la même zone 4 qui avait provoqué la dernière impulsion comptée. Etant donnée la relation linéaire rigoureuse qui lie le nombre N à la position angulaire de la flèche F et qui s'apparente à une relation d'identité, toutes les impulsions préalablement comptées lors de la rotation de l'arbre dans le sens direct sont décomptées lors du mouvement dans le sens rétrograde, si bien que lorsque la flèche F coïncide à nouveau avec le repère R, N est égal à zéro. Il faut noter que lorsque N décroît à partir de sa valeur maximale, l'égalité N = N' se produit à nouveau, ce qui provoque aussi une impulsion en sortie du comparateur 19. Cette deuxième impulsion ne doit pas être prise en compte en sortie de l'organe 20. A cet effet, l'organe 20 peut comporter un diviseur par deux réalisé à l'aide de bascules bistables. De préférence, à la place du diviseur par deux, un circuit-porte ET non représenté disposé entre les organes 19 et 20 reçoit sur ses deux entrées les sorties des organes 19 et 21. Au passage à zéro de N lors du mouvement rétrograde, l'organe 18 délivre à sa sortie un niveau logique 1 qui est transmis à travers le circuit-porte OU exclusif 21, ce qui fait passer le compteur-décompteur 10 à l'état de comptage. La demi oscillation de la flèche F décrite ci-dessus pour un demi secteur angulaire parcouru par l'arbre 2 se répète pour le demi secteur opposé avec une amplitude au moins égale à celle qu'impose la valeur du nombre N', de façon qu'au bout d'une oscillation complète, la flèche F étant en regard du repère R, le système soit dans le même état logique que lors du démarrage, mais avec une vitesse non nulle. Dans le mode de réalisation de la figure 1, l'organe 18 est par exemple constitué d'un circuit-porte NON OU suivi d'une bascule bistable. Il faut noter que le système décrit ci-dessus fonctionne de la même façon si les états logiques sur la borne 8 et en sortie de l'organe 18 sont inversés.

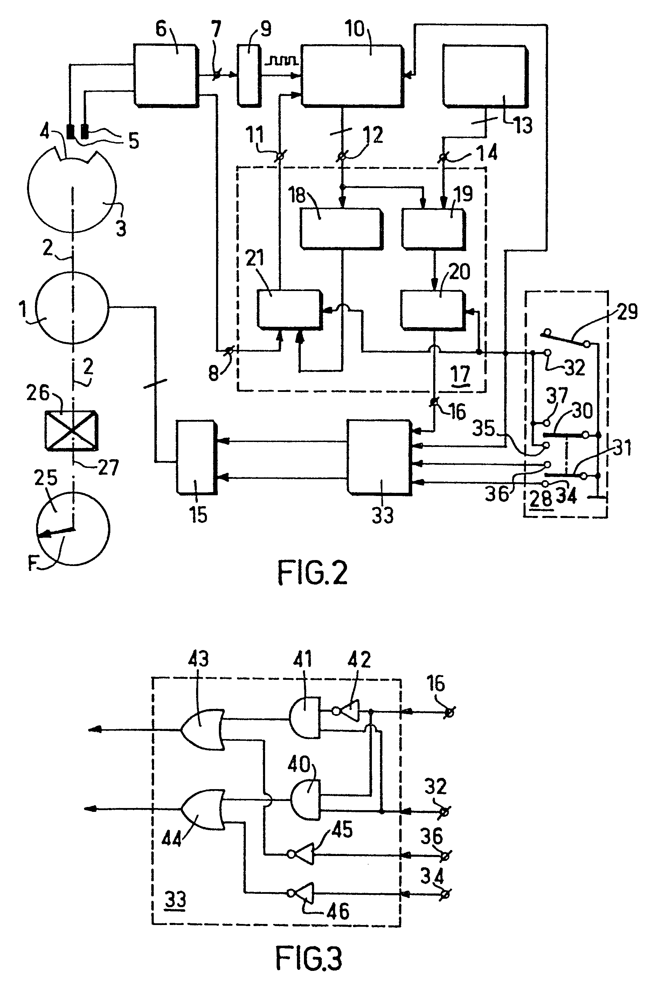

Une variante du premier mode de réalisation de l'invention décrit ci-dessus consiste à utiliser une logique qui répond à des impulsions et non plus à des états logiques. Selon cette variante, l'organe 6 délivre, sur la borne 8, une impulsion lors de chaque changement de sens de rotation de l'arbre 2 et l'organe 18 une impulsion lors de chaque passage à zéro du nombre N. Dans ce cas, l'organe 18 est réduit à un simple circuit-porte NON OU. La fonction que doit réaliser l'organe 21 consiste alors à inverser l'état de sa sortie chaque fois qu'il reçoit une impulsion sur l'une de ses entrées, en alternance. Ceci peut être réalisé simplement au moyen d'un circuit-porte OU suivi d'une bascule bistable à commande symétrique, ou, de préférence, au moyen d'une bascule bistable à deux entrées, ce qui garantit que deux changements d'état logique successifs sur la borne 11 sont dus à une impulsion sur l'une puis sur l'autre entrée de l'organe 21. L'une des applications envisagées pour l'invention est la commande en rotation d'une antenne de radar. Un mode de réalisation pour cette application particulière est décrit en référence à la figure 2, conformément à la fonction N(θ) représentée à la figure 8a. Dans ce cas, une charge, constituée par l'antenne symbolisée en 25 est solidaire en rotation du moteur 1 par l'intermédiaire d'un réducteur 26. Le moteur 1 est de préférence un moteur asynchrone triphasé. Il est alors avantageux de fixer le disque 3 sur l'arbre du moteur et non sur l'arbre de l'antenne 27. En effet, si la démultiplication apportée par le réducteur 26 est assez grande, une seule zone de détection, 4, sur le disque 3 peut suffire. D'autre part, il est souhaitable de pouvoir modifier la position angulaire de la flèche F ou de passer du mode « veille » (balayage d'un secteur) au mode « rotation continue ». A cet effet, un dispositif à contacts 28 est prévu. Il comporte un commutateur à deux positions de marche-arrêt 29 représenté sur la figure 2 dans la position « marche » et deux contacteurs à trois positions jumelés 30 et 31 représentés sur la figure 2 dans leur position neutre. La borne de choix 32 du commutateur 29 est la borne de remise à zéro du système de veille : lorsqu'elle est reliée à la masse, elle empêche le fonctionnement en mode « veille » en repositionnant à zéro les organes 10, 20, 21 et un organe logique de commande des contacteurs du moteur, 33. Cette mise à zéro du système peut avoir lieu soit à partir du commutateur 29 (position « arrêt ») soit à partir du contacteur 30 (position « inhibition »). Les contacteurs 30, 31 sont par exemple des clés ou des boutons poussoirs qui sont en position neutre au repos. Lorsque la clé est actionnée vers le bas (bornes 34 et 35) la rotation continue de l'antenne est obtenue en sens direct par exemple, le sens rétrograde étant alors obtenu en actionnant la clé vers le haut : bornes 36 et 37. Lorsque la clé est relâchée le commutateur 29 étant dans sa position indiquée sur la figure 2, le système repart en mode « veille » autour de la nouvelle position angulaire acquise par la flèche F à la fin de la rotation continue forcée de l'antenne. On décrit ci-dessous en référence à la figure 3 une réalisation possible du dispositif 33. Sur la figure 3 la borne 16 est reliée directement à la première entrée d'un circuit-porte ET 40 ainsi qu'à la première entrée d'un circuit-porte ET 41 par l'intermédiaire d'un inverseur 42. Une deuxième entrée des circuits-porte 41 et 40 est reliée à la borne de remise à zéro 32 et la sortie de chacun de ces circuits est fournie respectivement à un circuit-porte OU 43 et un circuit-porte OU 44. Une deuxième entrée du circuit-porte 43 et du circuit-porte 44 est reliée, par l'intermédiaire de circuits inverseurs 45 et 46, respectivement aux bornes 36 et 34.

Lorsque les organes de contact 29, 30, 31 sont dans la position indiquée sur la figure 2, les bornes 34, 36, 32 sont à l'état logique « 1 » (au moyen d'une alimentation électrique non représentée) et selon que la borne 16 est le siège de l'état « 1 » ou bien de l'état « 0 », la configuration de sortie des circuits-porte 43 et 44 est « 0 » et « 1 », ce qui impose le sens de rotation direct à l'arbre 2 par l'intermédiaire de l'organe 15, ou bien « 1 » et « 0 », ce qui impose le sens de rotation rétrograde. Pour passer du mode « veille » au mode « rotation continue » il suffit, en partant des positions indiquées sur la figure 2, d'actionner dans un sens ou dans l'autre la clé des contacteurs jumelés 30, 31. Par exemple, pour obtenir le sens de rotation rétrograde il suffit de mettre à la masse les bornes 36 et 37 (état logique « 0 »). La borne 37 étant reliée à la borne 32, on obtient simultanément que le dispositif logique 17 et le compteur-décompteur 10 soient inhibés et remis à zéro et que les circuits-porte 40 et 41 soient rendus non passants. La borne 34 étant à l'état « 1 », le circuit-porte OU 44 délivre un « 0 » et la borne 36 étant à l'état « 0 », le circuit-porte OU 43 délivre un « 1 ». Le sens de rotation direct s'obtient de façon symétrique par établissement des états « 0 » et « 1 » sur les bornes 34 et 36, respectivement, toutes choses égales par ailleurs.

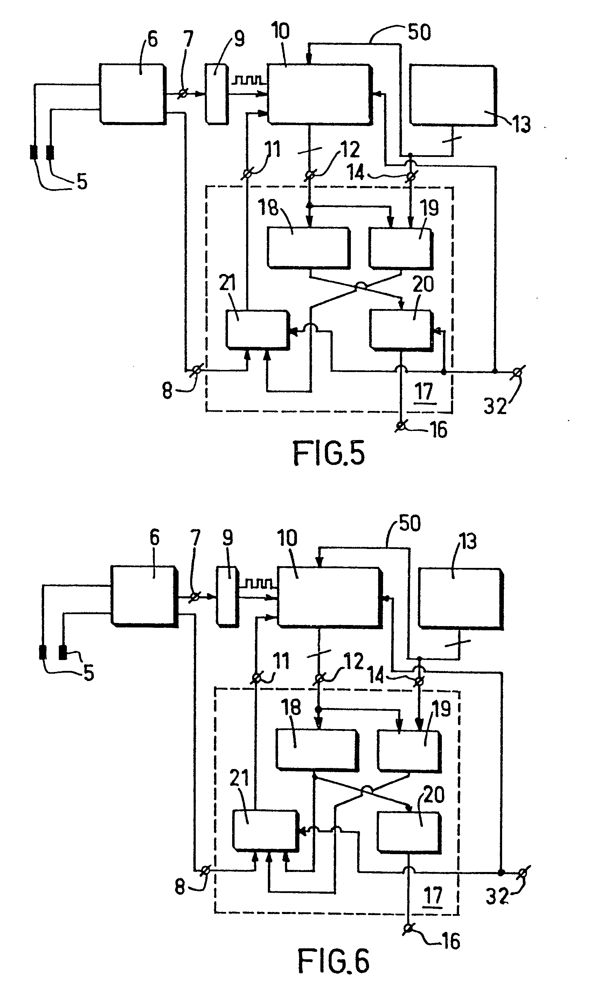

Selon un troisième mode de réalisation représenté à la figure 4 la capacité du compteur-décompteur 10 est limitée à la valeur du nombre N' affiché dans l'organe 13. La fonction $N(\theta)$ relative à ce mode de réalisation est représentée à la figure 8b. Sur la figure 4, on n'a pas représenté, à titre de simplification, les organes relatifs au moteur et à sa commande, ces organes pouvant être ceux de la figure 1 ou ceux de la figure 2, ni la commande de remise à zéro des organes 10 et 17. Dans ce cas, l'égalité des nombres N et N' inverse aussi le sens de comptage. A cet effet la sortie du comparateur 19 est aussi fournie à une troisième entrée de l'organe 21 au moyen d'un conducteur 48. Selon ce mode de réalisation, l'utilisation d'un circuit-porte ET entre les organes 19 et 20 n'est plus possible et l'organe 20 comporte un diviseur par deux réalisé par exemple au moyen de bascules bistables. Le passage de l'arbre à chaque extrémité du secteur à balayer se traduit, pour chaque extrémité par un train de deux impulsions rapprochées dans le temps en sortie du comparateur 19. Pour faire en sorte que la première de ces deux impulsions correspondant à une variation centripète de l'angle de rotation soit toujours prise en compte dans l'organe 20 et jamais la seconde, on peut prévoir que, de façon connue, chaque impulsion reçue par l'organe 20 déclenche dans ce dernier une action monostable pendant la durée de laquelle une impulsion reçue par l'organe 20, en l'occurrence la deuxième impulsion du train précité, soit inhibée dans ce dernier. On réalise ainsi simultanément les fonctions de division par deux et de prise en compte de la bonne impulsion parmi deux impulsions consécutives, fonctions qui doivent être réalisées entre le comparateur 19 et la borne 16, cette variante pouvant être utilisée pour les autres modes de réalisation. Pour le mode de réalisation de la figure 4, une logique qui répond à des impulsions est utilisée de préférence, la borne 8, la sortie de l'organe 18 et le conducteur 48 étant le siège d'impulsions. Lors de l'apparition d'une impulsion sur l'une quelconque de ces trois entrées de l'organe 21, l'état logique à la sortie de ce dernier, soit la borne 11, est inversé. Cette fonction est réalisée, dans l'organe 21, par exemple au moyen d'un circuit-porte OU recevant les trois entrées précitées, suivi d'une bascule bistable à commande symétrique, ou bien au moyen d'une bascule bistable à trois entrées, par exemple une bascule du type RS à trois entrées. Grâce aux remises à zéro et au pré-positionnement de certaines bascules, le cycle démarre comme dans le cas de la figure 1. Le démarrage ayant lieu selon un sens prédéterminé, en comptage par exemple (borne 11 à l'état « 1 »), les phases consécutives suivantes se déroulent : lors de l'égalité N = N' par valeurs croissantes de $\theta$ une impulsion en sortie de l'organe 19 fait passer le compteur-décompteur 10 en décomptage et provoque l'inversion de la commande de sens de rotation. Lors de l'inversion effective de sens de rotation, une impulsion qui apparaît en 8 impose le comptage. L'égalité N = N' par valeurs décroissantes de θ impose le décomptage. Le passage à zéro de N impose le comptage. Le balayage du deuxième demi secteur se déroule comme décrit ci-dessus pour le premier demi secteur et le mouvement peut se poursuivre indéfiniment sans aucune dérive, au cours du temps, du plan théorique du demi secteur balayé, plan dont la trace est l'axe défini par l'alignement de la flèche F et du repère R sur la figure 1.

Il faut noter que pour les deux premiers modes de réalisation de l'invention décrits ci-dessus, il est possible de modifier l'amplitude angulaire du secteur à balayer, pendant le fonctionnement du système, sans modifier la position angulaire de l'axe théorique du secteur de balayage, simplement en modifiant la valeur du nombre N', en 13. Pour le troisième mode de réalisation, il peut se produire un décalage angulaire de l'axe.

Selon d'autres modes de réalisation de l'invention, décrits ci-dessous en référence aux figures 5 et 6, le démarrage a lieu alors que le compteur-décompteur 10 est en position de décomptage, le nombre N' étant préalablement chargé dans le compteur-décompteur 10.

Sur les figures 5 et 6, les organes relatifs au moteur et à sa commande ne sont pas représentés. Ils peuvent être ceux de la figure 1 ou de la figure 2.

Si l'on compare le schéma de la figure 5 à celui de la figure 2, on note les seules différences suivantes :

Les destinations des sorties des organes 18 et 19 sont interverties, celle de l'organe 18 étant fournie à l'organe 20 et celle du comparateur 19 à l'organe 21 sur la figure 5. D'autre part la sortie multiple de l'organe d'affichage 13 est aussi fournie au moyen du conducteur multiple 50 au compteur-décompteur 10 dans le but d'y afficher la valeur du nombre N' lorsque la borne 32 est activée. Sur le schéma de la figure 5, ce qui était une entrée de remise à zéro devient donc une entrée d'ordre de chargement en 10 du nombre N' affiché en 13. Le fonctionnement du système de la figure 5 est, pour la fonction N(θ) représentée à la figure 8c, analogue à celui des figures 2 et 8a, à cela près que lors des différentes phases du cycle de balayage les états de comptage, respectivement de décomptage, sont inversés, en 10, ce qui correspond à un pré-positionnement inverse de la sortie de l'organe 21. D'autre part, l'organe 20 de commande de changement de sens de rotation du moteur n'est plus commandé par l'égalité N = N' mais par les passages à zéro de N par valeurs décroissantes et, symétriquement, l'égalité N = N' provoque l'inversion du sens de comptage. Sur la figure 8c les valeurs de N qui sont représentées symboliquement en valeurs négatives sont en réalité, en partant de zéro, par exemple les valeurs N', N' − 1, N' − 2 ...

Le mode de réalisation de la figure 6 est celui pour lequel : la fonction N(θ) est celle qui est indiquée à la figure 8d, le nombre N' est affiché en 10 sous l'influence d'un signal adéquat sur la borne 32, l'inversion de la commande de changement de sens est provoquée par les passages à zéro de N par valeurs décroissantes, et l'inversion du sens de comptage, successivement par chaque passage à zéro de N, chaque inversion effective du sens de rotation et chaque obtention de l'égalité N = N', les sorties respectives des organes 18, 6 (borne 8) et 19 étant fournies à l'organe 21.

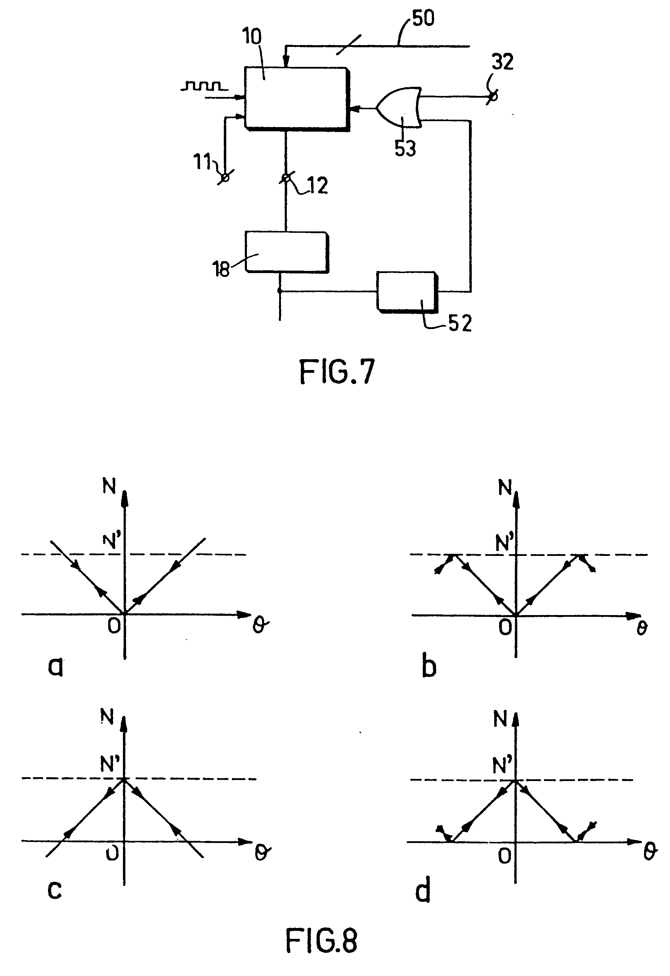

Il faut noter que pour les quatrième et cinquième modes de réalisation selon les figures 5 et 6, lorsqu'on modifie la valeur de N', en 13, pendant le fonctionnement du système, la nouvelle valeur de N' n'est pas prise en compte, en 10, tant qu'un ordre de remise à zéro et de chargement n'apparaît pas en 32. Il est possible de remédier à cet inconvénient comme décrit ci-dessous en référence à la figure 7.

Sur la figure 7 seuls sont représentés le compteur-décompteur 10, le détecteur de passage à zéro 18 avec leurs liaisons et le conducteur de chargement relié à la borne 32, les organes 10 et 18 étant supposés reliés au reste du système comme indiqué sur la figure 5 ou la figure 6. En plus des éléments des figures 5 ou 6 une liaison est présente entre la sortie de l'organe 18 et l'entrée de chargement du compteur-décompteur 10, par l'intermédiaire d'un circuit de mise en forme d'impulsion 52 et d'un circuit-porte OU 53 qui reçoit sur une deuxième entrée le signal sur la borne 32. Dans ces conditions, si la valeur de N' est modifiée en 13 à un instant quelconque du cycle de balayage, lors du premier passage à zéro de N qui suit cet instant, la nouvelle valeur de N' sera affichée en 10 et on obtiendra un angle de balayage correspondant à la nouvelle valeur de N'. Dans ce cas, cependant, un décalage angulaire de l'axe théorique du secteur de balayage se produit lors du premier cycle correspondant à la nouvelle valeur de N'.

Pour les modes de réalisation de l'invention décrits ci-dessus, on utilise de préférence un moteur asynchrone triphasé. L'inversion du sens de rotation du moteur s'obtient dans ce cas de façon connue en permutant deux parmi les trois phases d'alimentation, grâce à des contacts multiples actionnés par relais. On peut aussi utiliser un moteur à courant continu de construction simple. Pour certaines applications, l'application à une antenne mobile pour radar notamment, il peut être avantageux d'utiliser un moteur à deux vitesses de rotation, la vitesse lente étant alors utilisée lors de la rotation forcée dans un sens prédéterminé de l'antenne. Il est aussi possible d'utiliser les deux vitesses pour le mode « veille » par exemple en imposant la vitesse lente au démarrage (balayage du premier demi secteur) puis entre un angle prédéterminé et l'angle défini par la valeur de N', lors du balayage dans chaque sens du secteur complet, la vitesse rapide étant préalablement utilisée pour la partie angulaire complémentaire du secteur. Un moteur asynchrone à deux stators convient pour cette variante de l'invention que l'homme de métier est à même d'adapter aux modes de réalisation décrits ci-dessus. L'avantage de cette variante est qu'elle permet d'imprimer à l'antenne, en mode « veille » un mouvement alternatif qui se rapproche un peu plus du mouvement sinusoïdal qui peut être considéré comme optimal, si on le compare au mouvement obtenu lorsque le moteur ne comporte qu'une seule vitesse de rotation.

**Revendications**

1. Système pour commander en rotation l'arbre (2) d'un moteur (1) de façon à provoquer automatiquement un mouvement d'oscillation de cet arbre de part et d'autre d'une position angulaire (R) prédéterminée qui reste fixe au cours du temps, ledit système comprenant des contacteurs déterminant le sens de rotation dudit moteur, caractérisé en ce qu'il comporte en outre un disque (3) solidaire en rotation dudit arbre et muni à sa périphérie de zones de détection (4) régulièrement espacées, deux capteurs (5) associés à un organe de mise en forme d'impulsions (6) pour détecter lesdites zones, traduire leur passage sous forme d'impulsions électriques calibrées ainsi que leur sens de passage sous forme d'un signal électrique, un compteur-décompteur (10) desdites impulsions calibrées retardées, dont l'état de charge est un nombre de valeur N variable, un organe d'affichage (13) d'un nombre fixe prédéterminé N′ et, dans un dispositif logique (17) qui reçoit les nombres N et N′ ainsi que ledit signal électrique, un comparateur (19) pour comparer les nombres N et N′, un détecteur (18) de passage à zéro du nombre N, un organe de commande (20) du changement de sens de rotation dudit moteur et un organe (21) de commande de changement de sens de comptage dudit compteur-décompteur (10).

2. Système selon la revendication 1 caractérisé en ce que ledit organe de commande (20) de changement de sens de rotation du moteur reçoit la sortie dudit comparateur (19) et que ledit organe (21) de commande de changement de sens de comptage du compteur-décompteur reçoit sur une première entrée (8) ledit signal électrique et sur une deuxième entrée la sortie dudit détecteur (18) de passage à zéro du nombre N, le démarrage du système ayant lieu en position de comptage.

3. Système selon la revendication 1 ou 2, caractérisé en ce que la sortie dudit organe de commande (20) de changement de sens de rotation est fournie à l'organe comportant lesdits contacteurs (15) déterminant le sens de rotation du moteur.

4. Système selon la revendication 1 ou 2 caractérisé en ce qu'il comporte en outre un dispositif à contacts (28) et un organe logique (33) de commande des contacteurs (15) du moteur, ce dernier recevant le signal de sortie dudit organe (20) de commande du changement de sens de rotation, un signal de remise à zéro ainsi que deux signaux de commande forcée dans l'un ou l'autre sens de rotation de la part du dispositif à contacts (28), et fournissant deux signaux de sortie sur deux entrées dudit organe comportant lesdits contacteurs (15) déterminant le sens de rotation du moteur.

5. Système selon l'une des revendications 1 à 4 caractérisé en ce que ledit organe de commande (20) de changement de sens de rotation du moteur reçoit la sortie dudit comparateur (19) et que ledit organe (21) de changement de sens de comptage reçoit sur une première entrée ledit signal électrique, sur une deuxième entrée la sortie dudit détecteur (18) de passage à zéro du nombre N et sur une troisième entrée la sortie dudit comparateur (19) des nombres N et N′, le démarrage du système ayant lieu en position de comptage.

6. Système selon l'une des revendications 1 à 5 caractérisé en ce qu'il comporte (Fig. 2) un conducteur commun de remise à zéro pour lesdits organes de commande (20) de changement de sens de rotation et de comptage et pour ledit compteur-décompteur (10).

7. Système selon les revendications 1, 3 et 6 prises ensemble ou 1, 4 et 6 prises ensemble, caractérisé en ce que ledit compteur-décompteur (10) reçoit ledit nombre N′, son entrée de remise à zéro se substituant à une entrée de commande de chargement de N′, que ledit organe (20) de changement de sens de rotation du moteur reçoit la sortie dudit détecteur (18) de passage à zéro du nombre N et que ledit organe (21) de commande de changement de sens de comptage reçoit sur une première entrée (8) ledit signal électrique et sur une deuxième entrée le signal de sortie dudit comparateur (19), le démarrage du système ayant lieu en position de décomptage.

8. Système selon la revendication 7 caractérisé en ce que ledit organe de commande (21) de changement de sens de comptage reçoit en outre sur une troisième entrée la sortie dudit détecteur (18) de passage à zéro du nombre N.

9. Système selon la revendication 7 ou la revendication 8 caractérisé en ce que la sortie dudit détecteur (18) de passage à zéro du nombre N est reliée à l'entrée de commande de chargement de N′ dudit compteur-décompteur, par l'intermédiaire d'un circuit-porte OU (53).

10. Système selon l'une des revendications précédentes caractérisé en ce que ledit moteur est un moteur asynchrone à une ou à deux vitesses nominales de fonctionnement.

11. Utilisation d'un système selon l'une des revendications précédentes pour l'entraînement en rotation d'une antenne radar.

**Claims**

1. A system for controlling the rotation of the shaft (2) of a motor (1) so as to provide automatically an oscillatory motion of this shaft to one and the other side of a predetermined angular position (R) which remains fixed with the course of time, the said system comprising contactors which determine the direction of rotation of the said motor, characterized in that it further comprises a disk (3) which accurately follows the rotation of the said shaft and is provided at its circumference with regularly spaced detection zones (4), two sensors (5) which are associated with a pulse-shaping unit (6) to detect the said zones and to translate their passage into calibrated electric pulses as well as their direction of passage into an electric signal, and also comprises an up/down counter (10) for the delayed said calibrated pulses, whose count is a number having a variable value (N), a display device (13) displaying a predetermined fixed number N' and, in a logic device (17) which receives the numbers N and N' as well as the said electric signal, a comparator (19) for comparing the numbers N and N', a detector (18) for detecting when the number N attains zero, a control unit (20) for changing the direction of rotation of the said motor and a control unit (21) for changing the counting direction of the said up/down counter (10).

2. A system as claimed in Claim 1, characterized in that the said control unit (20) for changing the direction of rotation of the motor receives the output of the said comparator (19) and that the said control unit (21) for changing the counting direction of the up/down counter receives at a first input (8) the said electric signal and at a second input the output the said detector (18) for detecting when the number N attains zero, operation of the system beginning in the upward-counting state.

3. A system as claimed in Claim 1 or 2, characterized in that the output of the said control unit (20) for changing the direction of rotation is applied to the unit comprising the said contactors (15) which determine the direction of rotation of the motor.

4. A system as claimed of Claim 1 or 2, characterized in that it further comprises a contacting device (28) and a logic unit (33) for controlling the contactors (15) of the motor, the latter receiving the output signal of the said unit (20) for controlling the change of direction of rotation and a reset-to-zero signal as well as two control signals which are received from the contacting device (28) and compel the shaft to rotate in one or the other direction, and supplying two output signals to two inputs of the said unit comprising the said contactors (15) which determine the direction of rotation of the motor.

5. A system as claimed in any of Claims 1 to 4, characterized in that the said unit (20) for controlling the change in the direction of rotation of the motor receives the output signal of the said comparator (19) and that the said unit (21) for changing the counting direction receives at a first input the said electric signal, at a second input the output from the said detector (18) for detecting when the number N attains zero and at a third input the output of the said comparator (19) comparing the numbers N and N', operation of the system beginning in the upward-counting state.

6. A system as claimed in any of Claims 1 to 5, characterized in that it comprises (Fig. 2) a common reset-to-zero conductor for the said units (20) which control the change of the direction of rotation and the counting direction and for the said up/down counter (10).

7. A system as claimed in Claims 1, 3, and 6 taken together or 1, 4 and 6 taken together, characterized in that the said up/down counter (10) receives the said number N', its reset-to-zero input being replaced by a set-to-N' control input, that the said unit (20) for changing the direction of rotation of the motor receives the output of the said detector (18) detecting the zero passage of the number N and that the said unit (21) for changing the counting direction receives at a first input (8) the said electric signal and at a second input the output signal of the said comparator (19), operation of the system beginning in the downward-couting state.

8. A system as claimed in Claim 7, characterized in that the said unit (21) for changing the counting direction receives *inter alia* at a third input the output signal of the said detector (18) which detects when the number N attains zero.

9. A system as claimed in Claim 7 or Claim 8, characterized in that the output of the said detector (18) for detecting when the number N attains zero is connected to the set-to-N' control input of the said up/down counter, *via* an OR-gate (53).

10. A system as claimed in any of the preceding Claims, characterized in that the said motor is an asynchronous motor having one or two nominal operating speeds.

11. The use of a system as claimed in any of the preceding Claims for rotationally driving a radar antenna.

**Ansprüche**

1. System zum in Drehung Versetzen der Achse (2) eines Motors (1) in der Art, dass automatisch eine Schwingbewegung dieser Achse nach beiden Seiten im einer vorbestimmten Winkellage (R) herbeigeführt wird, die im Laufe der Zeit ungeändert bleibt, wobei das genannte System Kontaktgeber enthält, die die Drehrichtung des genannten Motors ermitteln, dadurch gekennzeichnet, dass das System ausserdem eine mit der genannten Achse mitdrehende Scheibe (3) enthält, die an ihrem Umfang in regelmässigen Abständen voneinander liegende Detektionszonen (4) aufweist, weiterhin zwei Aufnehmer (5), die mit einem Impulsformer (6) zusammenarbeiten zum Detektieren der genannten Zonen, und zum Umwandeln ihres Durchganges in kalibrierte elektrische Impulse und ihre Durchgangsrichtung in ein elektrisches Signal, ferner einen Vorwärts-Rückwärtszähler (10), der die genannten verzögerten kalibrierten Impulse zählt, deren Ladungszustand eine veränderliche Zahl mit dem Wert N ist, und ein Anzeigeelement (13) einer vorbestimmten festen Zahl N' und, in einer logischen Schaltung (17), die die Zahlen N und N' sowie das genannte elektrische Signal erhält, eine Vergleichsanordnung (19) zum Vergleichen der Zahlen N und N', einen Nulldurchgangsdetektor (18) der Zahl N, ein Steuerelement (20) für die Drehrichtungsänderung des genannten Motors und ein Steuerelement (21) für die Zählrichtungsänderung des genannten Vorwärts-Rückwärtszählers (10).

2. System nach Anspruch 1, dadurch gekennzeichnet, dass das genannte Steuerelement (20) für die Drehrichtungsänderung des Motors das Ausgangssignal der genannten Vergleichsanordnung (19) erhält und dass das genannte Steuerelement (21) für die Zählrichtungsänderung des Vorwärts-Rückwärtszählers an einem ersten Eingang (8) das genannte elektrische Signal erhält und an einem zweiten Eingang das Ausgangssignal des genannten Nulldurchgangsdetektors (18) der Zahl N, wobei das System in der Vorwärts-Zählstellung startet.

3. System nach Anspruch 1 oder 2, dadurch gekennzeichnet, dass das Ausgangssignal des genannten Steuerelements (20) für die Drehrichtungsänderung dem Element zugeführt wird, das die genannten Kontaktgeber (15) enthält, die die Drehrichtung des Motors ermitteln.

4. System nach Anspruch 1 oder 2, dadurch gekennzeichnet, dass es ausserdem eine Kontaktanordnung (28) sowei ein logisches Element (33) zur Steuerung der Kontaktgeber (15) des Motors enthält, wobei letzteres das Ausgangssignal des genannten Steuerelements (20) zur Änderung der Drehrichtung erhält sowie ein Nullrückstellsignal und zwei Signale zur forcierten Steuerung in der einen oder in der anderen Drehrichtung, die von der Kontaktanordnung (28) herrühren, und wobei zwei Ausgangssignale zwei Eingängen des genannten Elementes zugeführt werden, das die genannten Kontaktgeber (15) enthält, wodurch die Drehrichtung des Motors ermittelt wird.

5. System nach einem der Ansprüche 1 bis 4, dadurch gekennzeichnet, dass das genannte Steuerelement (20) zur Änderung der Drehrichtung des Motors das Ausgangssignal der genannten Vergleichsanordnung (19) enthält und dass das genannte Element (21) zur Änderung der Zählrichtung an einem ersten Eingang das genannte elektrische Signal erhält, an einem zweiten Eingang das Ausgangssignal des genannten Nulldurchgangsdetektors (18) der Zahl N und an einem dritten Eingang das Ausgangssignal der genannten Vergleichsanordnung (19) der Zahlen N und N', wobei das System in der Vorwärts-Zählstellung startet.

6. System nach einem der Ansprüche 1 bis 5, dadurch gekennzeichnet, dass es einen gemeinsamen Nullrückstelleiter für die genannten Steuertelemente (20) zur Änderung der Drehrichtung und der Zählung und für den genannten Vorwärts-Rückwärtszähler (10) enthält (Figur 2).

7. System nach Anspruch 1, 3 und 6 zusammen oder 1, 4 und 6 zusammen, dadurch gekennzeichnet, dass der genannte Vorwärts-Rückwärtszähler (10) die genannte Zahl N' erhält, wobei sein Nullrückstelleingang durch einen Eingang zur Steuerung der Ladung mit N' ersetzt wird, dass das genannte Element (20) zur Änderung der Drehrichtung des Motors das Ausgangssignal des genannten Nulldurchgangsdetektors (18) der Zahl N erhält und dass das genannte Element (21) zur Steuerung der Änderung der Zählrichtung an einem ersten Eingang (8) das genannte elektrische Signal und an einem zweiten Eingang das Ausgangssignal der genannten Vergleichsanordnung (19) erhält, wobei das System in der Rückwärts-Zählstellung startet.

8. System nach Anspruch 7, dadurch gekennzeichnet, dass das genannte Element (21) zur Steuerung der Zählrichtungsänderung ausserdem an einem dritten Eingang das Ausgangssignal des genannten Nulldurchgangsdetektors (18) der Zahl N erhält.

9. System nach Anspruch 7 oder Anspruch 8, dadurch gekennzeichnet, dass der Ausgang des genannten Nulldurchgangsdetektors (18) der Zahl N mit dem Eingang zur Steuerung der Änderung von N' des genannten Vorwärts-Rückwärtszählers verbunden ist und zwar mittels einer ODER-Torschaltung (53).

10. System nach einem der vorstehenden Ansprüche, dadurch gekennzeichnet, dass der genannte Motor ein Asynchronmotor mit einer oder zwei Nennbetriebsdrehzahlen ist.

11. Anwendung eines Systems nach einem der vorstehenden Ansprüche zum in Drehung Versetzen einer Radarantenne.

FIG.1

FIG.4

FIG.2

FIG.3

2

FIG.5

FIG.6

FIG.7

FIG.8